(19) Europäisches Patentamt
European Patent Office
Office européen des brevets

(11) EP 4 563 630 A1

# (12) EUROPEAN PATENT APPLICATION
published in accordance with Art. 153(4) EPC

(43) Date of publication:
**04.06.2025 Bulletin 2025/23**

(21) Application number: **23846408.5**

(22) Date of filing: **21.07.2023**

(51) International Patent Classification (IPC):
***C08J 5/24*** *(2006.01)*

(52) Cooperative Patent Classification (CPC):
**C08J 5/24**

(86) International application number:
**PCT/JP2023/026808**

(87) International publication number:
**WO 2024/024677 (01.02.2024 Gazette 2024/05)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **26.07.2022 JP 2022119013**

(71) Applicant: **Mitsubishi Chemical Corporation**
**Tokyo 100-8251 (JP)**

(72) Inventor: **OGASAWARA, Hayato**
**Tokyo 100-8251 (JP)**

(74) Representative: **Hoffmann Eitle**
**Patent- und Rechtsanwälte PartmbB**
**Arabellastraße 30**
**81925 München (DE)**

## (54) PREPREG, FIBER-REINFORCED COMPOSITE MATERIAL, AND FIBER-REINFORCED COMPOSITE MATERIAL MANUFACTURING METHOD

(57) A fiber-reinforced composite article in which toughness is maintained and a strength and an elastic modulus are improved, and a prepreg for obtaining the fiber-reinforced composite article are provided. The prepreg of the present invention comprises a matrix resin composition comprising at least the following components (A) to (C), and carbon fibers. Component (A): an epoxy resin Component (B): an aliphatic polycarbonate resin Component (C): a curing agent

EP 4 563 630 A1

## Description

BACKGROUND OF THE INVENTION

Field of the Invention

The present invention primarily relates to a prepreg, a fiber-reinforced composite article, and a method of producing the fiber-reinforced composite article.
This application claims the benefit of priority of the prior Japanese Patent Application No. 2022-119013, filed in Japan on July 26, 2022, the entire contents of which are incorporated herein by reference.

Description of Related Art

Fiber-reinforced composite articles in which a matrix resin and reinforcing fibers are combined are used for various applications due to their excellent lightweight properties, rigidity, impact resistance, and the like. In particular, carbon fiber-reinforced composite articles are used in a wide range of fields such as sports and leisure applications such as fishing rods and golf shafts, automobile applications, and aircraft applications since the articles are lightweight and have a high strength and high rigidity.
As the matrix resin of the fiber-reinforced composite articles, a matrix resin including a thermosetting resin has been used in many cases since the matrix resin is excellent in impregnability into carbon fibers and in expressing physical properties after curing. In particular, a matrix resin in which an epoxy resin and a curing agent such as a dicyandiamide, an imidazole, or a urea compound are combined is widely used.
In order to realize a carbon fiber-reinforced composite article having a higher strength and higher rigidity, a matrix resin capable of efficiently exhibiting characteristics (high strength and high elastic modulus) of carbon fibers is required.
Paten Document 1 proposes a composite material that reflects a tensile strength of reinforcing fibers by containing an epoxy resin, an aromatic polycarbonate resin, a dicyandiamide, and a curing accelerator for the dicyandiamide.
Patent Document 2 proposes a prepreg that can be practically used by containing an aromatic polycarbonate resin in which at least a part is crystallized to adjust the viscosity of an epoxy resin composition to a practical range, and has a good balance among rigidity, toughness, and flexibility.
Patent Document 3 proposes a carbon fiber-reinforced thermoplastic prepreg in which the impregnability of a resin into carbon fibers is improved by using a polycarbonate resin that includes at least a structural unit derived from a dihydroxy compound having a specific structure.

PRIOR ART

Patent Document

[Patent Document 1] Japanese Unexamined Patent Application, First Publication No. H2-92919
[Patent Document 2] Japanese Unexamined Patent Application, First Publication No. 2012-21112
[Patent Document 3] Japanese Unexamined Patent Application, First Publication No. 2014-133841

SUMMARY OF THE INVENTION

One object of the present invention is to provide a fiber-reinforced composite article in which toughness is maintained and a strength and an elastic modulus are improved, and a thermosetting prepreg for obtaining a fiber-reinforced composite article in which toughness is maintained and a strength and an elastic modulus are improved.
The present invention includes the following embodiments.

[1] A prepreg comprising: a matrix resin composition containing at least the following components (A) to (C); and carbon fibers.

Component (A): an epoxy resin
Component (B): an aliphatic polycarbonate resin
Component (C): a curing agent

[2] The prepreg according to [1], wherein an aliphatic polycarbonate resin having a glass transition temperature (Tg) of 80°C or higher is contained as the component (B).

[3] The prepreg according to [1] or [2], wherein the aliphatic polycarbonate resin of the component (B) includes a structural unit derived from a dihydroxy compound represented by Formula (1).

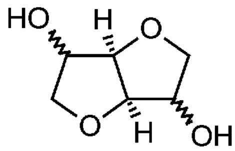

(1)

[4] The prepreg according to any one of [1] to [3], wherein the aliphatic polycarbonate resin of the component (B) includes a structural unit derived from at least one alicyclic dihydroxy compound selected from the group consisting of 1,2-cyclohexanedimethanol, 1,3-cyclohexanedimethanol, 1,4-cyclohexanedimethanol, tricyclodecanedimethanol, pentacyclopentadecanedimethanol, 2,6-decalindimethanol, 1,5-decalindimethanol, 2,3-decalindimethanol, 2,3-norbornanedimethanol, 2,5-norbornanedimethanol, and 1,3-adamantanedimethanol.

[5] The prepreg according to any one of [1] to [4], wherein at least one selected from the group consisting of dicyandiamides, urea compounds, acid hydrazide compounds, and imidazole compounds is contained as the component (C).

[6] The prepreg according to [5], wherein an imidazole compound is contained as the component (C).

[7] The prepreg according to any one of [1] to [6], wherein the matrix resin composition contains 5 parts by mass or more and 40 parts by mass or less of the aliphatic polycarbonate resin with respect to 100 parts by mass of the total epoxy resin.

[8] The prepreg according to any one of [1] to [7], wherein the matrix resin composition contains 8 parts by mass or more and 30 parts by mass or less of the aliphatic polycarbonate resin with respect to 100 parts by mass of the total epoxy resin.

[9] The prepreg according to any one of [1] to [8], wherein a mass ratio ([mass of matrix resin composition]/[mass of carbon fibers]) of the matrix resin composition to the carbon fibers is 0.25 to 9.

[10] The prepreg according to any one of [1] to [9], wherein the matrix resin composition is impregnated into a sheet of carbon fibers aligned in one direction.

[11] The prepreg according to any one of [1] to [10], wherein a biomass degree of the matrix resin composition is 5% or more.

[12] A fiber-reinforced composite article that is obtained by curing the prepreg according to any one of [1] to [11].

[13] A method of producing a fiber-reinforced composite article, comprising: pressing the prepreg according to any one of [1] to [11] at 100°C to 160°C.

[14] A prepreg comprising: a carbon fiber substrate that is impregnated with a matrix resin composition containing at least an epoxy resin, a polycarbonate resin including a structural unit derived from a dihydroxy compound represented by Formula (1), and imidazole compounds.

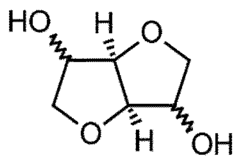

(1)

[15] The prepreg according to [14], wherein a polycarbonate resin having a glass transition temperature (Tg) of 80°C or higher is contained as the component (B).

[16] The prepreg according to [14] or [15], wherein the polycarbonate resin further includes a structural unit derived from at least one alicyclic dihydroxy compound selected from the group consisting of 1,2-cyclohexanedimethanol, 1,3-cyclohexanedimethanol, 1,4-cyclohexanedimethanol, tricyclodecanedimethanol, pentacyclopentadecanedimethanol, 2,6-decalindimethanol, 1,5-decalindimethanol, 2,3-decalindimethanol, 2,3-norbornanedimethanol, 2,5-norbornanedimethanol, and 1,3-adamantanedimethanol.

[17] The prepreg according to any one of [14] to [16], wherein the matrix resin composition contains 5 parts by mass or more and 30 parts by mass or less of the polycarbonate resin with respect to 100 parts by mass of the total epoxy resin.

[18] The prepreg according to any one of [14] to [17], wherein the carbon fiber substrate is a sheet of carbon fibers aligned in one direction.

[19] The prepreg according to any one of [14] to [18], wherein a biomass degree of the matrix resin composition is 5% or more.

According to one aspect of the present invention, it is possible to obtain a fiber-reinforced composite article in which toughness is maintained and a strength and an elastic modulus are improved, and a prepreg for obtaining a fiber-reinforced composite article in which toughness is maintained and a strength and an elastic modulus are improved.

## DETAILED DESCRIPTION OF THE INVENTION

[Prepreg]

One embodiment of the present invention relates to a prepreg. The prepreg according to the embodiment contains: a matrix resin composition containing at least the following components (A) to (C); and carbon fibers.

Component (A): an epoxy resin
Component (B): an aliphatic polycarbonate resin
Component (C): a curing agent

[Matrix Resin Composition]

The matrix resin composition contains at least the above-described component (A), component (B), and component (C). The matrix resin composition may further contain an additional thermoplastic resin or additive. The matrix resin composition contained in the prepreg may be a thermosetting matrix resin composition, and the thermosetting matrix resin composition forms a crosslinked structure by heating.
The biomass degree of the matrix resin composition is preferably 5% or more, more preferably 10% or more, and still more preferably 20% or more.
The biomass degree of the matrix resin composition may be calculated from the biomass degrees of raw materials, the feed ratio during blending, and the feed ratio during a synthesis reaction or a polymerization reaction. Otherwise, the obtained resin composition may be directly analyzed by a $^{14}C$ measurement method.
The measurement of the biomass degree by the $^{14}C$ measurement method can be performed by calculating from the value of the contained amount of $^{14}C$ obtained by a radiocarbon ($^{14}C$) measurement method according to ASTM-D6866. Since the carbon dioxide in the atmosphere includes a certain amount of $^{14}C$, it is known that plants that grow by taking in carbon dioxide in the atmosphere also contain a certain amount of $^{14}C$. Meanwhile, it is also known that fossil fuels hardly include $^{14}C$. Therefore, the biomass degree can be calculated by measuring the ratio of $^{14}C$ in all carbon atoms.

[Component (A)]

The epoxy resin of the component (A) is not particularly limited as long as it is a compound having an epoxy group. Examples of the epoxy resin include a bisphenol A type epoxy resin; a bisphenol F type epoxy resin; a heterocyclic epoxy resin (for example, an epoxy resin including a ring structure derived from isosorbide, a tri-isocyanurate ring, or an oxazolidone ring in the molecule); a novolak type epoxy resin derived from, for example, cresol novolak, phenol novolak, or bisphenol A novolak; a glycidylamine type epoxy resin (for example, triglycidylaminophenol, tetraglycidyl diaminodiphenylmethane, diglycidylaniline, diglycidyl toluidine, and tetraglycidyl xylene diamine); a glycidyl ester type epoxy resin derived from a polycarboxylic acid (for example, a dimer acid, a trimer acid, an isophthalic acid, a terephthalic acid, a phthalic acid, and a hydrophthalic acid); a bisphenol S type epoxy resin; a benzenediol type epoxy resin derived from, for example, resorcinol, catechol, hydroquinone, or dihydroanthracene; an aromatic epoxy resin derived from, for example, dihydroanthrahydroquinone, dihydroxydiphenyl ether, thiodiphenol, dihydroxynaphthalene, trishydroxyphenylmethane, or tetraphenylolethane; a bisphenoxyethanol fluorene type epoxy resin; a bisphenol fluorene type epoxy resin; and a biscresol fluorene type epoxy resin. Moreover, for example, a resin having an oxirane ring, which is produced by oxidation of an allyl group, can also be used. As the epoxy resin, a bisphenol A type epoxy resin, a bisphenol F type epoxy resin, a heterocyclic epoxy resin, a condensed ring type epoxy resin, a novolak type epoxy resin, a glycidylamine type epoxy resin, and a glycidyl ester type epoxy resin are preferable.
As the component (A), a liquid epoxy resin or a solid epoxy resin can be blended. The liquid epoxy resin is an epoxy resin that is a liquid at 25°C. The liquid epoxy resin primarily contributes to improvement in solubility of the component (B) and additional thermoplastic resin and in strength, elastic modulus, and heat resistance of a cured product of the matrix resin composition.
The viscosity of the liquid epoxy resin at 25°C is preferably 500 Pa·s or less, and more preferably 300 Pa·s or less. In addition, the viscosity is preferably 0.1 Pa·s or more. The viscosity may be, for example, 0.1 Pa·s or more and 500 Pa·s or less, or 0.1 Pa·s or more and 300 Pa·s or less. In a case where the viscosity is in this range, the workability of the epoxy resin composition can be improved.
The viscosity can be measured by applying periodic deformation (distortion) to a sample with a rotary rheometer

and detecting a stress and a phase difference, which are generated by the periodic deformation (distortion).

The amount of the liquid epoxy resin blended is preferably 5 parts by mass or more with respect to 100 parts by mass of the total epoxy resin contained in the matrix resin composition. The lower limit of the amount of the liquid epoxy resin blended is more preferably 8 parts by mass or more, still more preferably 15 parts by mass, particularly preferably 25 parts by mass, and most preferably 28 parts by mass. In addition, the upper limit of the amount of the liquid epoxy resin blended is preferably 80 parts by mass, more preferably 75 parts by mass, and still more preferably 70 parts by mass. The above-described upper limits and lower limits can be combined optionally. For example, the amount of the liquid epoxy resin blended may be 5 parts by mass or more and 80 parts by mass or less, 8 parts by mass or more and 75 parts by mass or less, or 15 parts by mass or more and 70 parts by mass or less. In a case where the amount of the liquid epoxy resin blended is not less than the lower limit, the component (B) and additional thermoplastic resin component are easily dissolved, and the cured resin obtained has an excellent strength and an excellent elastic modulus. On the other hand, in a case where the amount of the liquid epoxy resin blended is not more than the upper limit, a cured resin having excellent toughness can be obtained.

In addition, by blending a solid epoxy resin, the viscosity at room temperature can be increased, and the prepreg is easy to handle. The solid epoxy resin is an epoxy resin that is a solid at ordinary temperature and is liquefied by heating. The solid epoxy resin is preferably an epoxy resin having a softening point of 50°C or higher. The softening point is preferably 55°C or higher, and more preferably 60°C or higher since the cured resin has excellent toughness. Meanwhile, since the heat resistance of the cured resin is properly maintained, a prepreg having excellent drape properties (mold shape followability) can be obtained, and a fiber-reinforced composite article having no voids can be obtained, the softening point is preferably 150°C or lower, and more preferably 145°C or lower. The above-described upper limits and lower limits can be combined optionally. For example, the softening point may be 50°C or higher and 150°C or lower, 55°C or higher and 150°C or lower, or 60°C or higher and 140°C or lower.

The amount of the solid epoxy resin blended is preferably 95 parts by mass or less with respect to 100 parts by mass of the total epoxy resin contained in the matrix resin composition. The upper limit of the amount of the solid epoxy resin blended is more preferably 90 parts by mass, still more preferably 80 parts by mass, particularly preferably 70 parts by mass, and most preferably 60 parts by mass. In addition, the lower limit of the amount of the solid epoxy resin blended is preferably 5 parts by mass, more preferably 8 parts by mass, and still more preferably 10 parts by mass. The above-described upper limits and lower limits can be combined optionally. For example, the amount of the solid epoxy resin blended may be 5 parts by mass or more and 80 parts by mass or less, 8 parts by mass or more and 95 parts by mass or less, or 10 parts by mass or more and 90 parts by mass or less. **In** a case where the amount of the solid epoxy resin blended is within the above-described range, it is possible to obtain a fiber-reinforced composite article that is excellent in strength, elastic modulus, heat resistance, and toughness, with excellent tackiness and drape properties (mold shape followability) of a prepreg and elimination of voids in the prepreg due to poor impregnation.

**In** a case where the component (B) and additional thermoplastic resin are dissolved in the epoxy resin in advance, the dissolution proceeds smoothly with the use of a bisphenol type epoxy resin or a glycidylamine type epoxy resin as the epoxy resin, and the viscosity of the obtained solution is also easily adjusted. These epoxy resins can be used alone or in combination.

**In** a case where it is desired to improve the heat resistance of the fiber-reinforced composite article, a novolak type epoxy resin or a glycidylamine type epoxy resin can be used.

**In** a case where it is desired to improve the biomass degree of the fiber-reinforced composite article, a glycidyl ester type epoxy resin derived from a biomass-derived acid, a glycidyl ether type epoxy resin produced from a natural product or non-edible biomass, or a heterocyclic epoxy resin derived from biomass-derived isosorbide can be used.

**In** addition, an epoxy resin using epichlorohydrin derived from glycerin, which is a by-product of biofuel, can also be suitably used. The epichlorohydrin can be suitably added and used not only to a skeleton derived from a natural product or biomass but also to a skeleton derived from a non-natural product or non-biomass.

**In** a case where it is desired to improve the toughness of the fiber-reinforced composite article, a heterocyclic epoxy resin containing an oxazolidone ring or a condensed ring type epoxy resin containing an isosorbide structure can be used.

An epoxy resin obtained by pre-reacting the above-described liquid epoxy resin with a polyamine to be described later may be used. Such an epoxy resin has a tertiary amine structure in the epoxy resin, and thus tends to exhibit excellent reactivity. Furthermore, in a case where an aromatic polyamine is used as the polyamine, an epoxy resin in which the strength, elastic modulus, and reactivity are balanced can be obtained, and thus it can be used according to the desired prepreg characteristics.

[Component (B)]

**In** a case where the matrix resin composition contains the component (B), it is possible to obtain a fiber-reinforced composite article in which toughness is maintained with an excellent strength and an excellent elastic modulus. The

aliphatic polycarbonate resin is a resin containing no aromatic structure in the molecular chain. Since the aliphatic resin is used, it is possible to prevent the aliphatic polycarbonate resin from deteriorating due to the curing agent contained in the matrix resin composition in the prepreg, and it is possible to prevent a deterioration in handleability of the prepreg during storage.

The aliphatic polycarbonate resin can be produced by a method known in the related art. Examples thereof include a solution polymerization method using phosgene and a melt polymerization method including reaction with a diester carbonate, and a melt polymerization method in which a dihydroxy compound is reacted with a diester carbonate having lower toxicity in the presence of a polymerization catalyst is preferable.

As the diester carbonate, a generally known material can be used. Examples thereof include substituted diphenyl carbonate such as diphenyl carbonate and ditolyl carbonate; dimethyl carbonate; diethyl carbonate; and di-t-butyl carbonate. Diphenyl carbonate and substituted diphenyl carbonate are preferable, and diphenyl carbonate is more preferable.

As the polymerization catalyst (transesterification catalyst) in the melt polymerization method, a material known in the related art can be used, and for example, one or both of an alkali metal compound and an alkali earth metal compound are used. For example, a basic compound such as a basic boron compound, a basic phosphorus compound, a basic ammonium compound, or an amine-based compound may be used in combination in an auxiliary manner, with one or both of the alkali metal compound and the alkali earth metal compound. It is particularly preferable to use only one or both of the alkali metal compound and the alkali earth metal compound.

As the dihydroxy compound, a compound having a structure represented by Formula (1), an alicyclic dihydroxy compound, and other dihydroxy compounds can be used. The aliphatic polycarbonate resin preferably includes a structural unit derived from a dihydroxy compound represented by Formula (1) from the viewpoint of not lowering Tg of the fiber-reinforced composite article.

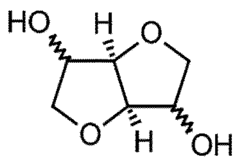

(1)

The component ratio (molar ratio) of the structural units constituting the aliphatic polycarbonate resin can be optionally selected, and the ratio is preferably 1:99 to 99:1 (mol%), and more preferably 10:90 to 90:10 (mol%) in terms of "structural unit derived from a dihydroxy compound represented by Formula (1):structural unit derived from an alicyclic dihydroxy compound". By using the structural unit derived from a dihydroxy compound represented by Formula (1), the molecular weight of the resin is easily increased and Tg also increases, so that the toughness of the fiber-reinforced composite article can be improved. By using the structural unit derived from an alicyclic dihydroxy compound, coloration and water absorption are suppressed, so that a decrease in mechanical properties due to a change in dimensions of the fiber-reinforced composite article can be suppressed.

Other dihydroxy compounds may be contained, for example, for the purpose of improving the flexibility, reducing the viscosity, and adjusting the polarity, within a range not significantly impairing the performance.

Examples of the compound represented by Formula (1) include isosorbide, isomannide, and isoidet, including isomers thereof, and one kind may be used alone, or two or more kinds may be used in combination. Isosorbide derived from sorbitol, which is produced from abundant and readily available starch as a resource, is preferable from the viewpoint of economic efficiency and ease of availability.

As the alicyclic hydroxy compound, a raw material known in the related art can be used, and for example, a compound including a 5-membered ring structure or a 6-membered ring structure can be used. The 6-membered ring structure may be fixed to a chair shape or a boat shape by a covalent bond. Examples of the alicyclic hydroxy compound include 1,2-cyclohexanedimethanol, 1,3-cyclohexanedimethanol, 1,4-cyclohexanedimethanol, tricyclodecanedimethanol, pentacyclopentadecanedimethanol, 2,6-decalindimethanol, 1,5-decalindimethanol, 2,3-decalindimethanol, 2,3-norbornanedimethanol, 2,5-norbornanedimethanol, and 1,3-adamantanedimethanol, which may be compounds modified with various substituents. That is, the aliphatic polycarbonate resin of the component (B) preferably includes a structural unit derived from at least one alicyclic dihydroxy compound selected from the group consisting of 1,2-cyclohexanedimethanol, 1,3-cyclohexanedimethanol, 1,4-cyclohexanedimethanol, tricyclodecanedimethanol, pentacyclopentadecanedimethanol, 2,6-decalindimethanol, 1,5-decalindimethanol, 2,3-decalindimethanol, 2,3-norbornanedimethanol, 2,5-norbornanedimethanol, and 1,3-adamantanedimethanol.

Furthermore, as the alicyclic hydroxy compound, for example, dihydroxy compounds may be used in which an aromatic nucleus is hydrogenated by hydrogenating aromatic bisphenols such as 2,2-bis(4-hydroxyphenyl)propane (bisphenol A), 2,2-bis(4-hydroxy-3,5-dimethylphenyl)propane, 2,2-bis(4-hydroxy-3,5-diethylphenyl)propane, 2,2-bis(4-hydroxy-(3,5-diphenyl)phenyl)propane, 2,2-bis(4-hydroxy-3,5-dibromophenyl)propane, 2,2-bis(4-hydroxyphenyl)pentane, 2,4'-dihydroxydiphenylmethane, bis(4-hydroxyphenyl)methane, bis(4-hydroxy-5-nitrophenyl)methane, 1,1-bis(4-hydroxyphenyl)ethane, 3,3-bis(4-hydroxyphenyl)pentane, 1,1-bis(4-hydroxyphenyl)cyclohexane, bis(4-hydroxyphenyl) sulfone, 2,4'-dihydroxydiphenylsulfone, bis(4-hydroxyphenyl)sulfide, 4,4'-dihydroxydiphenyl ether, 4,4'-dihydroxy-3,3'-dichlorodiphenyl ether, 4,4'-dihydroxy-2,5-diethoxydiphenyl ether, 9,9-bis(4-(2-hydroxyethoxy)phenyl)fluorene, 9,9-bis(4-(2-hydroxy-2-methylethoxy)phenyl)fluorene, 9,9-bis(4-hydroxyphenyl)fluorene, and 9,9-bis(4-hydroxy-2-methylphenyl)fluorene. In addition, the dihydroxy compound may include non-hydrogenated aromatic bisphenols in view of economic efficiency in process during hydrogenation of the aromatic nucleus. In that case, the content ratio of the non-hydrogenated aromatic bisphenols is preferably 10 mass% or less, more preferably 5 mass% or less, and still more preferably 1 mass% or less in 100 mass% of the dihydroxy compound.

The alicyclic hydroxy compounds may be used alone or in combination of two or more thereof. Cyclohexanedimethanols, tricyclodecanedimethanols, adamantane diols, and pentacyclopentadecanedimethanols are preferable, and from the viewpoint of ease of availability and ease of handling, 1,4-cyclohexanedimethanol, 1,3-cyclohexanedimethanol, 1,2-cyclohexanedimethanol, and tricyclodecanedimethanol are preferable.

Examples of other dihydroxy compounds include linear aliphatic dihydroxy compounds such as ethylene glycol, 1,3-propanediol, 1,2-propanediol, 1,4-butanediol, 1,3-butanediol, 1,2-butanediol, 1,5-pentanediol, 1,6-hexanediol, 1,7-heptanediol, 1,8-octanediol, 1,9-nonanediol, 1,10-decanediol, 1, 12-dodecanediol, hydrogenated dilinoleyl glycol, and hydrogenated dioleyl glycol, branched aliphatic dihydroxy compounds such as 1,3-butylene glycol, 2-methyl-1,3-propanediol, neopentyl glycol, 2-ethyl-1,6-hexanediol, 2,2,4-trimethyl-1,6-hexanediol, 3-methyl-1,5-pentanediol, 2-n-butyl-2-ethyl-1,3-propanediol, 2,2-diethyl-1,3-propanediol, 2,4-diethyl-1,5-pentanediol, 1,2-hexane glycol, 1,2-octyl glycol, 2-ethyl-1,3-hexanediol, 2,3-diisobutyl-1,3-propanediol, 2,2-diisoamyl-1,3-propanediol, and 2-methyl-2-propyl-1,3-propanediol, and oxyalkylene glycols such as diethylene glycol, triethylene glycol, and tetraethylene glycol.

As the linear aliphatic dihydroxy compound, 1,3-propanediol, 1,4-butanediol, 1,6-hexanediol, 1,9-nonanediol, and 1,10-decanediol are preferable. As the branched aliphatic dihydroxy compound, 3-methyl-1,5-pentanediol, 2-n-butyl-2-ethyl-1,3-propanediol, 2,2-diethyl-1,3-propanediol, and 2,4-diethyl-1,5-pentanediol are preferable.

The glass transition temperature (Tg) of the aliphatic polycarbonate resin is preferably 80°C or higher, and more preferably 90°C or higher. The method described in Examples can be applied for the measurement of the glass transition temperature. In a case where the glass transition temperature is 80°C or higher, it is possible to suppress the overflow of the resin due to a rapid decrease in viscosity during the temperature rise in prepreg molding, and it is possible to suppress a decrease in glass transition temperature (Tg) of the fiber-reinforced composite article and a decrease in mechanical properties under a heating environment. When the component (B) has crystallinity, the glass transition temperature means a softening point.

The glass transition temperature (Tg) can be adjusted to the above-described range using a method such as adjusting the kind or blending ratio of a monomer that is used in the production of the aliphatic polycarbonate resin, adjusting the polymerization temperature, or adjusting the amount of an additive added.

The physical properties related to the glass transition temperature (Tg) of the component (B) include a degree of polymerization (specifically, molecular weight), and it is known that, in a case where the degree of polymerization reaches a certain level or higher, it can be expressed by reduced viscosity. The degree of polymerization (specifically, molecular weight) of the component (B) is measured using reduced viscosity, except for polycarbonate diols having a low glass transition temperature and a low degree of polymerization (low molecular weight).

The lower limit of the reduced viscosity of the aliphatic polycarbonate resin is usually 0.2 dL/g, preferably 0.3 dL/g, and more preferably 0.35 dL/g. Therefore, a decrease in tackiness and heat resistance of the obtained matrix resin composition at ordinary temperature is suppressed, and the fracture toughness and mechanical properties of the matrix resin composition after curing are improved. Further, the upper limit of the reduced viscosity is usually 1.2 dL/g, preferably 1 dL/g, and more preferably 0.8 dL/g. Therefore, dissolving in the liquid resin is facilitated. The method described in Examples can be applied for the measurement of the reduced viscosity.

The above-described upper limits and lower limits can be combined optionally. For example, the reduced viscosity may be 0.2 dL/g or more and 1.2 dL/g or less, 0.3 dL/g or more and 1 dL/g or less, or 0.35 dL/g or more and 0.8 dL/g or less.

The total amount of the component (B) blended is preferably 1 part by mass or more, more preferably 3 parts by mass or more, and still more preferably 5 parts by mass or more with respect to 100 parts by mass of all the epoxy resin components, from the viewpoint of an improvement in toughness, strength, and elastic modulus of the fiber-reinforced composite article. From the viewpoint of impregnability into carbon fibers and handleability for prepreg layering, the total amount of the component (B) blended is preferably 40 parts by mass or less, more preferably 30 parts by mass or less, still more preferably 20 parts by mass or less, and particularly preferably 14 parts by mass or less with respect to 100 parts by mass of all the epoxy resin components.

The above-described upper limits and lower limits can be combined optionally. For example, the total amount of the component (B) blended may be 1 part by mass or more and 40 parts by mass or less, 1 part by mass or more and 30 parts by mass or less, 3 parts by mass or more and 20 parts by mass or less, or 5 parts by mass or more and 14 parts by

mass or less with respect to 100 parts by mass of all the epoxy resin components.

From the viewpoint of an improvement in toughness, strength, and elastic modulus of the fiber-reinforced composite article, the total amount of the component (B) blended is preferably 0.5 mass% or more, and more preferably 5 mass% or more with respect to 100 mass% of the matrix resin composition. From the viewpoint of impregnability into reinforcing fibers and handleability for prepreg layering, the total amount of the component (B) blended is preferably 35 mass% or less, more preferably 30 mass% or less, and particularly preferably 20 mass% or less with respect to 100 mass% of the matrix resin composition.

The above-described upper limits and lower limits can be combined optionally. For example, the total amount of the component (B) blended may be 0.5 mass% or more and 35 mass% or less, 0.5 mass% or more and 30 mass% or less, or 5 mass% or more and 20 mass% or less in 100 mass% of the matrix resin composition.

In a case where the fiber-reinforced composite article is used for sports applications, automobile members, and the like, the total amount of the component (B) blended can be set to 8 mass% or more and 40 mass% or less with respect to 100 mass% of the matrix resin composition to improve the fracture toughness, impact absorption, stickiness during processing, and the like.

The component (B) contained in the matrix resin composition of the present invention can be analyzed with high accuracy by a generally known analysis method or by combining the analysis methods. For example, gel permeation chromatography (GPC) analysis and solvent extraction after freeze pulverization may be combined.

According to infrared absorption spectroscopy, a peak is observed near 1,760 to 1,780 $cm^{-1}$ as absorption of a carbonyl group derived from a carbonate bond.

According to NMR analysis, a signal of the structural unit of the component (B) is obtained, and thus from a pattern, a shift, and the like of the signal, it is recognized whether the structural unit is incorporated into the polymer structure.

According to reactive thermal decomposition GC-MS, the structural unit can be detected, and thus the degree of certainty can be increased by comparison of NMR signals with a compound corresponding to the structural unit as a standard.

In addition, the molecular weight, reduced viscosity, and glass transition temperature of the component (B) can be obtained by broadening of the signal of H adjacent to the carbonate group. In this case, the accuracy can be increased with a similar substance as a standard.

[Component (C)]

The component (C) is a curing agent. The component (C) is not particularly limited as long as it is a compound that contributes to curing of the epoxy group of the component (A). The curing agent preferably includes at least one curing agent selected from the group consisting of dicyandiamides, urea compounds, imidazole compounds, and acid hydrazide compounds. Among these, imidazole compounds are particularly preferable from the viewpoint of increasing the glass transition temperature of the cured product or molded sheet and shortening the molding time. In addition, the above-described curing agents may be used alone or in combination of two or more thereof. Amines may be included as other curing agents.

As the dicyandiamides, for example, dicyandiamide and products obtained by pre-reacting the dicyandiamide with the epoxy resins mentioned in the component (A) can be used.

The dicyandiamides may be used alone or in combination of two or more thereof.

Examples of the urea compounds include aromatic urea in which an ureido group is bonded to an aromatic ring and aliphatic urea in which an ureido group is bonded to an aliphatic chain.

Examples of the aliphatic urea include urea represented by Formula (2).

$$R^1\text{-NH-CO-NR}^2R^3 \ldots \qquad (2)$$

(In Formula (2), $R^1$ represents a hydrogen atom or an alkyl group having 1 to 6 carbon atoms, and $R^2$ and $R^3$ each independently represent an alkyl group having 1 to 6 carbon atoms.)

Examples of the alkyl group include a methyl group, an ethyl group, a propyl group, a butyl group, an isopropyl group, and a t-butyl group, and a methyl group and an ethyl group are particularly preferable.

Examples of the aliphatic urea include dimethylurea obtained from isophorone diisocyanate and dimethylamine, dimethylurea obtained from m-xylylenediisocyanate and dimethylamine, and dimethylurea obtained from hexamethylene diisocyanate and dimethylamine.

Examples of the aromatic urea include aromatic dimethylurea such as phenyldimethylurea, methylenebis(phenyldimethylurea), and tolylenebis(dimethylurea).

Examples of the aromatic dimethylurea include 4,4'-methylenebis(phenyldimethylurea) (MBPDMU), 3-phenyl-1,1-dimethylurea (PDMU), 3-(3,4-dichlorophenyl)-1,1-dimethylurea (DCMU), 3-(3-chloro-4-methylphenyl)-1,1-dimethylurea, and 2,4-bis(3,3-dimethylureido)toluene (TBDMU). From the viewpoint of curing-acceleration ability and imparting heat resistance to the cured resin, phenyldimethylurea, methylenebis(phenyldimethylurea), and tolylenebis(dimethylurea) are more preferable, and from the viewpoint of ease of procurement, ease of curing in a short time, and exhibition of high heat resistance of the cured resin, DCMU, PDMU, and TBDMU are particularly preferable.

The urea compounds may be used alone or in combination of two or more thereof.

As the imidazole compounds, for example, an imidazole derivative, an imidazole adduct, an inclusion imidazole, a microcapsule type imidazole, and an imidazole compound in which a stabilizer is coordinated can be used. Since a nitrogen atom having an unshared electron pair contained in the structure of the imidazole compounds activates the epoxy group, it is possible to accelerate the curing.

Examples of the imidazole derivative include 2-methylimidazole, 2-ethyl-4-methylimidazole, 2-undecylimidazole, 2-heptadecylimidazole, 1,2-dimethylimidazole, 2-phenylimidazole, 2-phenyl-4-methylimidazole, 1-benzyl-2-phenylimidazole, 1-benzyl-2-methylimidazole, 1-cyanoethyl-2-methylimidazole, 1-cyanoethyl-2-ethyl-4-methylimidazole, 1-cyanoethyl-2-undecylimidazole, 1-cyanoethyl-2-phenylimidazole, 1-cyanoethyl-2-ethyl-4-methylimidazolium trimellitate, 1-cyanoethyl-2-undecylimidazolium trimellitate, 1-cyanoethyl-2-phenylimidazolium trimellitate, 2,4-diamino-6-(2'-methylimidazolyl-(1'))-ethyl-s-triazine, 2,4-diamino-6-(2'-undecylimidazolyl-(1'))-ethyl-s-triazine, 2,4-diamino-6-(2'-ethyl-4-methylimidazolyl-(1'))-ethyl-s-triazine, 2,4-diamino-6-(2'-methylimidazolyl-(1'))-ethyl-s-triazine isocyanuric acid adduct, 2-phenylimidazole isocyanuric acid adduct, 2-methylimidazole isocyanuric acid adduct, 1-cyanoethyl-2-phenyl-4,5-di(2-cyanoethoxy)methylimidazole, 2-phenyl-4,5-dihydroxymethylimidazole, and 2-phenyl-4-methyl-5-hydroxymethylimidazole.

The imidazole adduct, the inclusion imidazole, the microcapsule type imidazole, or the imidazole compound in which a stabilizer is coordinated is obtained by modifying these imidazole derivatives. These exhibit excellent pot life in a low temperature range and have high curing or curing-acceleration ability with activity suppressed by an adduct treatment, an inclusion treatment using a foreign element, a microencapsulation treatment, or coordination with a stabilizer performed on the imidazole derivative.

The imidazole compounds may be used alone or in combination of two or more thereof.

Examples of the acid hydrazide compounds include an aromatic hydrazide compound and an aliphatic hydrazide compound.

Examples of the aromatic hydrazide compound include salicylic acid hydrazide, benzoic acid hydrazide, 1-naphthoic acid hydrazide, terephthalic acid dihydrazide, isophthalic acid dihydrazide, 2,6-naphthoic acid dihydrazide, 2,6-pyridine dihydrazide, 1,2,4-benzene trihydrazide, 1,4,5,8-naphthoic acid tetrahydrazide, and pyromellitic acid tetrahydrazide.

Examples of the aliphatic hydrazide compound include dihydrazide compounds having a hydantoin skeleton, preferably a valine hydantoin skeleton (a skeleton in which a carbon atom of a hydantoin ring is substituted with an isopropyl group), such as formhydrazide, acetohydrazide, propionic acid hydrazide, oxalic acid dihydrazide, malonic acid dihydrazide, succinic acid dihydrazide, glutaric acid dihydrazide, adipic acid dihydrazide, pimelic acid dihydrazide, sebacic acid dihydrazide, 1,4-cyclohexane dihydrazide, tartaric acid dihydrazide, malic acid dihydrazide, iminodiacetic acid dihydrazide, N,N'-hexamethylene bissemicarbazide, citric acid trihydrazide, nitriloacetic acid trihydrazide, cyclohexane tricarboxylic acid trihydrazide, and 1,3-bis(hydrazinocarbonoethyl)-5-isopropyl hydantoin, tris(1-hydrazinocarbonylmethyl)isocyanurate, tris(2-hydrazinocarbonylethyl)isocyanurate, tris(3-hydrazinocarbonylpropyl)isocyanurate, and bis(2-hydrazinocarbonylethyl)isocyanurate.

The acid hydrazide compounds may be used alone or in combination of two or more thereof.

The amines are not particularly limited, and examples thereof include chain aliphatic polyamine (for example, diethylenetriamine, tetraethylenepentamine, hexamethylenediamine, 1,3-pentanediamine, and 2-methylpentamethylenediamine), alicyclic polyamine (for example, isophoronediamine, 4,4'-methylene biscyclohexylamine, 4,4'-methylene bis(2-methylcyclohexylamine), bis(aminomethyl)norbornane, 1,2-cyclohexanediamine, and 1,3-bisaminomethylcyclohexane), and aromatic polyamine (for example, m-xylylenediamine, 4,4'-methylenedianiline, 4,4'-methylene bis(2-methylaniline), 4,4'-methylene bis(2-ethylaniline), 4,4'-methylene bis(2-isopropylaniline), 4,4'-methylene bis(2-chloroaniline), 4,4'-methylene bis(2,6-dimethylaniline), 4,4'-methylene bis(2,6-diethylaniline), 4,4'-methylene bis(2-isopropyl-6-methylaniline), 4,4'-methylene bis(2-ethyl-6-methylaniline), 4,4'-methylene bis(2-bromo-6-ethylaniline), 4,4'-methylene bis(N-methylaniline), 4,4'-methylene bis(N-ethylaniline), 4,4'-methylene bis(N-sec-butylaniline), 4,4'-diaminodiphenyl sulfone, 3,3'-diaminodiphenyl sulfone, 4,4'-cyclohexylidenedianiline, 4,4'-(9-fluorenylidene)dianiline, 4,4'-(9-fluorenylidene) bis(N-methylaniline), 4,4'-diaminobenzanilide, 4,4'-oxydianiline, 2,4-bis(4-aminophenylmethyl) aniline, 4-methyl-m-phenylenediamine, 2-methyl-m-phenylenediamine, N,N'-di-sec-butyl-p-phenylenediamine, 2-chloro-p-phenylenediamine, 2,4,6-trimethyl-m-phenylenediamine, 2,4-diethyl-6-methyl-m-phenylenediamine, 4,6-diethyl-2-methyl-m-phenylenediamine, 4,6-dimethyl-m-phenylenediamine, and trimethylene bis(4-aminobenzoate)).

These amines may be used as an adduct or a block copolymer.

The total amount of the component (C) blended is preferably 0.5 parts by mass or more, and more preferably 1.0 part by mass or more with respect to 100 parts by mass of all the epoxy resin components since the epoxy resin can be

sufficiently cured. In addition, for excellent storage stability, the total amount of the component (C) blended is preferably 40 parts by mass or less, more preferably 20 parts by mass or less, and particularly preferably 10 parts by mass or less with respect to 100 parts by mass of all the epoxy resin components.

The above-described upper limits and lower limits can be combined optionally. For example, the total amount of the component (C) blended may be 0.5 parts by mass or more and 40 parts by mass or less, 0.5 parts by mass or more and 20 parts by mass or less, or 1.0 part by mass or more and 10 parts by mass or less with respect to 100 parts by mass of all the epoxy resin components.

In a case where the dicyandiamides are used, urea compounds or imidazole compounds may be used in combination from the viewpoint of handleability during molding.

In a case where the dicyandiamides and urea compounds are used in combination, the mass ratio (dicyandiamides/urea compounds) can be set to, for example, 1 to 2.

In a case where the dicyandiamides and imidazole compounds are used in combination, the mass ratio (dicyandiamides / imidazole compounds) can be set to, for example, 0.01 to 1.

In a case where the dicyanamides, urea compounds, and imidazole compounds are used in combination, the mass ratio (imidazole compounds / urea compounds) can be set to 0.01 to 10.

In a case where the acid hydrazide compounds are used, urea compounds or imidazole compounds may be used in combination.

In a case where the acid hydrazide compounds and urea compounds are used in combination, the mass ratio (acid hydrazide compounds/urea compounds) can be set to, for example, 1.0 to 2.0.

In a case where the acid hydrazide compounds and imidazole compounds are used in combination, the mass ratio (acid hydrazide compounds / imidazole compounds) can be set to, for example, 0.01 to 1.0.

[Thermoplastic Resin]

In a case where the matrix resin composition contains a thermoplastic resin (that means a resin other than the component (B)) as an additional component, it is possible to control the polarity, suppress or induce the layer separation, and improve the moldability by the control of melt attraction.

Examples of the thermoplastic resin include, but are not limited thereto, polyamide, polyester, polycarbonate other than the component (B), polyether sulfone, polyphenylene ether, polyphenylene sulfide, polyether ether ketone, polyether ketone, polyimide, polytetrafluoroethylene, polyether, polyolefin, polyarylate, polysulfone, polyacrylonitrile styrene, polystyrene, polyacrylonitrile, polymethyl methacrylate, acrylonitrile-butadiene-styrene copolymer (ABS), acrylonitrile-ethylene propylene rubber-styrene copolymer (AES), acrylonitrile-acrylic rubber-styrene copolymer (ASA), polyvinyl chloride, polyvinyl formal resin, phenoxy resin, and resins obtained by block-copolymerizing the above thermoplastic resins.

An aromatic polycarbonate resin may be contained within a range not significantly impairing the performance, but from the viewpoint of a strength and an elastic modulus of the obtained fiber-reinforced composite article, it is preferable that the aromatic polycarbonate resin be not contained.

Since it is possible to suppress the protrusion of the resin during molding, polyether sulfone, a polyvinyl formal resin, and a phenoxy resin are more preferable.

The thermoplastic resins may be used alone or in combination of two or more thereof.

The contained amount of the thermoplastic resin can be adjusted within a range of 30 parts by mass or less with respect to 100 parts by mass of the total epoxy resin. From the viewpoint of suppression of the resin flow during molding, the total value of the component (B) and the thermoplastic resin is preferably adjusted to 1 part by mass or more and 30 parts by mass or less, and more preferably 2 parts by mass or more and 25 parts by mass or less with respect to 100 parts by mass of the total epoxy resin.

[Additive]

Examples of the additive include a stabilizer, an inhibitor, a flame retardant, a release agent, an inorganic filler, an organic filler, an organic pigment, and an inorganic pigment.

The stabilizer and the prohibitor can be selected from various viewpoints. From the viewpoint of suppression of hydrolysis, examples thereof include a linear carbodiimide compound and a cyclic carbodiimide compound, and from the viewpoint of stabilization of the curing agent, examples thereof include a stabilizer using an inclusion compound and a stabilizer using a boric acid compound.

Examples of the flame retardant include a phosphorus-based flame retardant (for example, phosphorus-containing epoxy resin, red phosphorus, phosphazene compound, phosphates, and phosphate esters), a hydrated metal compound-based flame retardant as an inorganic flame retardant (for example, aluminum hydroxide and magnesium hydroxide), and an inorganic oxide (for example, antimony compound, zinc borate, zinc stannate, Mo compound, ZrO, zinc

sulfide, zeolite, and a titanium oxide nanofiller-based flame retardant).

Examples of the release agent include a silicone oil, a wetting dispersant, an antifoaming agent, a defoaming agent, natural waxes, synthetic waxes, a metal salt of a linear fatty acid, an acid amide, esters, and paraffins.

Examples of the inorganic filler include a powder such as crystalline silica, amorphous silica, molten silica, calcium silicate, alumina, calcium carbonate, talc, and barium sulfate; glass fibers; and short carbon fibers.

Examples of the organic filler include cellulose fibers, flux fibers, ramie fibers, hemp fibers, and a wood powder. The fibers of the organic filler may be in a continuous fiber form, a nanofiber form, or a milled fiber form, and may be subjected to a surface hydrophilic treatment or a hydrophobic treatment.

The additives may be used alone or in combination of two or more thereof.

In a case where it is desired to suppress the protrusion of the resin during molding, crystalline silica or amorphous silica can be used. The smaller the particle diameter of the crystalline silica or the amorphous silica, the better the effect of suppressing the protrusion of the resin. Amorphous silica is more preferable from the viewpoint of safety. In addition, in a case where it is desired to improve the biomass degree, amorphous silica produced from a natural raw material can be used.

[Method of Producing Matrix Resin Composition]

The matrix resin composition is obtained, for example, by mixing the above-described components. Examples of the mixing method of the components include a method using a mixer (for example, three-roll mill, planetary mixer, kneader, homogenizer, and homo-disper).

The matrix resin composition can be used, for example, in the production of the prepreg by impregnating a carbon fiber substrate with the matrix resin composition, as will be described later. The viscosity of the matrix resin composition at 30°C can be set to 100 to 1,000,000 Pa·s.

[Carbon Fibers]

Carbon fibers are present as a carbon fiber substrate (aggregate of carbon fibers) in the prepreg. The carbon fibers may be arranged in a single direction or randomly arranged.

Examples of the form of the carbon fiber substrate include woven carbon fibers, nonwoven carbon fibers, and a sheet (UD sheet) in which long carbon fibers are aligned in one direction. From the viewpoint of being able to mold a fiber-reinforced composite article having a high specific strength and a high specific modulus, carbon fibers having a UD sheet form are preferable, and from the viewpoint of ease of handling, woven carbon fibers are preferable.

The areal weight of the carbon fiber substrate can be set to 10 g/m$^2$ or more and 4,000 g/m$^2$ or less.

The prepreg may contain reinforcing fibers other than the carbon fibers, and for example, glass fibers, aramid fibers, boron fibers can be used.

The fiber diameter of the carbon fibers can be set to 3 to 15 $\mu$m.

The number of carbon fibers in a carbon fiber bundle used for the carbon fiber substrate is preferably 1,000 to 70,000.

From the viewpoint of the rigidity of the fiber-reinforced composite article, the strand tensile strength of the carbon fibers is preferably 1.5 to 9 GPa.

From the viewpoint of the rigidity of the fiber-reinforced composite article, the strand tensile elastic modulus of the carbon fibers is preferably 150 to 260 GPa.

The strand tensile strength and strand tensile elastic modulus of the carbon fibers are values measured in accordance with JIS R 7601:1986.

(Method of Producing Prepreg)

The prepreg is obtained by, for example, impregnating the carbon fiber substrate with the above-described matrix resin composition.

The method of impregnating the carbon fiber substrate with the matrix resin composition is not limited to the following methods, but examples thereof include a wet method in which the matrix resin composition is dissolved in a solvent (for example, methyl ethyl ketone or methanol) to reduce the viscosity and then impregnated into the carbon fiber substrate; and a hot-melt method (dry method) in which the viscosity of the matrix resin composition is reduced by heating, and then the matrix resin composition is impregnated into the carbon fiber substrate.

The wet method is a method in which a carbon fiber substrate is immersed in a solution of a matrix resin composition and subsequently pulled out, and the solvent is evaporated using an oven or the like.

The hot-melt method includes a method in which a carbon fiber substrate is directly impregnated with a matrix resin composition the viscosity of which has been reduced by heating, and a method in which a matrix resin composition is

first applied to the surface of a substrate such as release paper to produce a film, the produced film is subsequently superimposed from one side or both sides of the carbon fiber substrate, and the carbon fiber substrate is impregnated with a resin by applying heat and pressure thereto. A coating layer obtained by coating the surface of a substrate such as release paper may be used in the hot-melt method while kept in an uncured state, or may be used in the hot-melt method after cured.

The hot-melt method is preferable since substantially no solvent remains to be present in the prepreg.

The temperature at which the carbon fiber substrate is impregnated with the matrix resin composition can be set to 50°C to 120°C, and is preferably lower than the glass transition temperature of the component (B) by 10°C or more from the viewpoint of suppression of the deterioration of the component (B).

The contained amount of the matrix resin composition in the prepreg is preferably 15 to 50 mass%, more preferably 20 to 45 mass%, and still more preferably 25 to 40 mass% with respect to the total mass of the prepreg from the viewpoint of an improvement in mechanical properties of the fiber-reinforced composite article and in adhesion properties to the carbon fibers.

[Fiber-Reinforced Composite Article]

The fiber-reinforced composite article is obtained by curing the prepreg. That is, the fiber-reinforced composite article includes a cured product of the matrix resin composition and the carbon fibers, which are included in the prepreg. The fiber-reinforced composite article can also be provided as a cured product of a laminate in which two or more prepregs are layered. The fiber-reinforced composite article is molded and obtained, for example, by a method including: layering two or more of the prepregs described above; and heating and curing the matrix resin composition while applying a pressure to the obtained laminate.

The molding method is not limited to the following methods, but examples thereof include a press molding method, an autoclave molding method, a bagging molding method, a wrapping tape method, an internal pressure molding method, a sheet wrap molding method, resin transfer molding (RTM) in which a molded article is obtained by impregnating filaments or a preform of reinforcing fibers with an epoxy resin composition and curing the epoxy resin composition, vacuum assisted resin transfer molding (VaRTM: vacuum resin impregnation producing method), filament winding, and resin film infusion (RFI).

Autoclave molding is preferable as a molding method that utilizes the characteristics of the matrix resin composition as much as possible. A press molding method is preferable from the viewpoint of high productivity and easiness in obtaining a high-quality fiber-reinforced composite article while utilizing the characteristics of the matrix resin composition.

In the production of the fiber-reinforced composite article by the press molding method, a prepreg or a preform produced by layering prepregs is preferably interposed between metal molds adjusted at a curing temperature in advance and heated and pressed to cure the prepreg or the preform. The temperature in the metal molds during press molding is preferably 100°C to 160°C. In addition, the prepreg or the preform is preferably cured for 1 to 20 minutes under a condition of 1 to 15 MPa.

Examples

The present invention will be described in greater detail with reference to Examples.

(Used Raw Materials)

[Component (A)]

· jER828: a liquid bisphenol A type epoxy resin with an epoxy equivalent of 189 g/eq, manufactured by Mitsubishi Chemical Corporation

· SR GreenPoxy 28: a liquid bisphenol A type epoxy resin with an epoxy equivalent of 180 g/eq and a biomass degree of 28%, manufactured by Sicomin

· jER604: a liquid glycidylamine type epoxy resin with an epoxy equivalent of 120 g/eq, manufactured by Mitsubishi Chemical Corporation

· EPICLON N-670: a solid cresol novolak type epoxy resin with an epoxy equivalent of 210 g/eq, manufactured by DIC Corporation

[Component (B)]

· B-1: structural unit derived from isosorbide/structural unit derived from 1,4-cyclohexanedimethanol = 70/30 mol%, Tg: 120°C, reduced viscosity 0.43 dl/g, biomass degree 59%, DURABIO D7340R manufactured by Mitsubishi Chemical Group Corporation
· B-2: structural unit derived from isosorbide/structural unit derived from tricyclodecanedimethanol = 70/30 mol%, Tg: 124°C, reduced viscosity 0.35 dl/g, biomass degree 53%, DURABIO T7430IR manufactured by Mitsubishi Chemical Corporation

[Thermoplastic Resin]

· YP-70: bisphenol A type/F type copolymer phenoxy resin, manufactured by NIPPON STEEL Chemical & Material Co., Ltd.

[Component (C)]

· DCMU: 3-(3,4-dichlorophenyl)-1,1-dimethylurea, DCMU-99 manufactured by Hodogaya Chemical Co., Ltd.
· DICY: dicyandiamide, jER CURE DICY15 manufactured by Mitsubishi Chemical Corporation
· 2MZA-PW: 2,4-diamino-6-[2'-methylimidazole-(1')]-ethyl-s-triazine, manufactured by Shikoku Chemicals Corporation

· 2MAOK-PW: 2,4-diamino-6-[2'-methylimidazolyl-(1 ')]-ethyl-s-triazine isocyanuric acid adduct, manufactured by Shikoku Chemicals Corporation
· PN-40: imidazole adduct, softening temperature 110°C, AJICURE PN-40 manufactured by Ajinomoto Fine-Techno Co., Inc.

[Additive]

· L-07N: a composition containing a boric acid ester compound, manufactured by Shikoku Chemicals Corporation
· Ethical silica: amorphous silica, Rice Husk Ethical Silica manufactured by

M.I.T CORPORATION

[Carbon Fibers]

· Carbon fibers: PAN-based carbon fibers, PYROFIL TR50S15L, manufactured by Mitsubishi Chemical Corporation

(Production of Resin Sheet)

The matrix resin composition was interposed between glass plates, disposed in an air-heating furnace, and then heated from room temperature to 130°C at 2 °C/min. After the temperature reached 130°C, the composition was further held for 120 minutes to obtain a resin sheet having a thickness of 2 mm.

(Production of Prepreg and Molded Sheet)

The matrix resin composition was applied to release paper at a predetermined areal weight using a roll coater to produce a resin film, and then the obtained resin film was superimposed on both surfaces of a carbon fiber sheet composed of carbon fibers adjusted to a predetermined areal weight. The carbon fibers were impregnated with the resin using a

heating roll, and an unidirectional prepreg was obtained.

The obtained prepreg was cut into 300 mm × 300 mm, and they were layered to obtain a laminate so that all the fibers were directed in the same direction. The laminate was heated in an autoclave at a rate of temperature increase of 2 °C/min under a pressure of 0.04 MPa, held at 80°C for 60 minutes, heated at a rate of temperature increase of 2 °C/min under a pressure of 0.6 MPa, and held at 130°C for 90 minutes to be heated and cured, and thus a molded sheet having a thickness of 2.0 to 2.2 mm was obtained.

(Measurement of Glass transition temperature (Tg))

The glass transition temperature of the aliphatic polycarbonate resin was measured using a differential scanning calorimeter DSC6220 (manufactured by SII NanoTechnology Inc.).

A resin sample of about 10 mg was put into an aluminum pan manufactured by the same company and sealed, and the sample was heated from 30°C to 200°C at a rate of temperature increase of 20 °C/min under a nitrogen stream of 50 mL/min. After keeping the temperature for 3 minutes, the sample was cooled to 30°C at a rate of 20 °C/min. The temperature was kept at 30°C for 3 minutes, and the sample was heated again to 200°C at a rate of 20 °C/min. From the DSC data obtained at the second temperature increase, an extrapolated starting temperature of glass transition, which was a temperature at an intersection between a straight line as an extended line of a baseline on a low temperature side to a high temperature side and a tangent line drawn at a point where a gradient of a curve of a part in which the glass transition changed stepwise was maximum, was obtained and defined as a glass transition temperature.

The glass transition temperatures of the resin sheet and the molded sheet were measured at a measurement frequency of 1 Hz and a rate of temperature increase of 5 °C/min using a rheometer (ARES-RDS, manufactured by TA Instruments Japan Inc.), and the top of the tanδ peak was defined as a glass transition temperature. As a test piece, a resin sheet having a thickness of 2 mm was processed to have a length of 55 mm and a width of 12.5 mm.

(Measurement of Reduced Viscosity)

The reduced viscosity of the aliphatic polycarbonate resin was measured by the following method.

A polycarbonate resin was dissolved using a solvent to produce a polycarbonate solution having a concentration of 0.60 g/dl. Methylene chloride was used as a solvent.

The reduced viscosity was measured at a temperature of 20.0°C ± 0.1°C using an Ubbelohde type viscometer "DT-504 automatic viscometer" manufactured by Chuorika Kougyo Co., Ltd. A relative viscosity ηrel was calculated from a passing time t0 of the solvent and a passing time t of the solution by Equation (α), and a specific viscosity ηsp (unit: $g\cdot cm^{-1}\cdot sec^{-1}$) was calculated from the relative viscosity ηrel by Equation (β). In Formula (β), η0 is the viscosity of the solvent. Then, the specific viscosity ηsp was divided by a concentration c (g/dL) of the polycarbonate solution, and a reduced viscosity η (η = ηsp/c) was calculated. The higher the value, the higher the molecular weight.

$$\eta rel = t/t0 \ ... \ (\alpha)$$

$$\eta sp = (\eta - \eta 0)/\eta 0 = \eta rel - 1 \ ... \ (\beta)$$

(Bending Test of Resin Sheet)

6 test pieces having a width of 8 mm and a length of 60 mm were cut out from a resin sheet having a thickness of 2 mm, and their strengths and elastic moduli were measured under the following conditions using a universal tester (Instron 5965, manufactured by Instron) to obtain the average of the 6 test pieces. In some tests, a breaking elongation and a yield elongation were also measured. Here, a high breaking elongation and a high yield elongation indicate excellent toughness.

The crosshead speed was 2 mm/min, and the thickness of the cured resin sheet was actually measured to set a distance between spans to (thickness × 16) mm.

(Bending Test of Molded Sheet)

The obtained molded sheet was cut into the following shape to obtain a test piece.

· Test piece for 0°-bending test: length of 100 mm × width of 12.7 mm, L/d = 40
· Test piece for 90°-bending test: length of 60 mm × width of 12.7 mm, L/d = 16

The test piece for a 0°-bending test was processed so that the carbon fibers were parallel to the longitudinal direction of the test piece, and the test piece for a 90°-bending test was processed so that the carbon fibers were substantially orthogonal to the longitudinal direction of the test piece.

For the obtained test piece, a universal tester manufactured by Instron was used and a three-point bending jig (indenter R = 5 mm, support R = 3.2 mm) was used under an environment of a temperature of 23°C and a humidity of 50 % RH. An inter-support distance (L) was set to 40 in a 0°-bending test and set to 16 in a 90°-bending test. In addition, a bending test was performed under a condition of crosshead speed (per min) = (L2 × 0.01)/(6 × d) with a ratio L/d of the inter-support distance (L) to a thickness (d) of the test piece, and the strength, elastic modulus, and breaking strain at 0° and 90° were obtained.

(Examples 1 to 17 and Comparative Examples 1 to 3)

According to the formulations shown in Tables 1 to 3, jER828 or SR GreenPoxy 28 and a curing agent were weighed in a container so that a mass ratio between the solid component and the liquid component was 1:2, and a mixture was obtained by stirring. The obtained mixture was further mixed finely using a three-roll mill (INOUE MFG., INC.) to obtain a curing agent masterbatch.

Next, jER828 or SR GreenPoxy 28, excluding the components used in the curing agent masterbatch in the formulations shown in Tables 1 to 3, and a thermoplastic resin or component (B) were weighed in a flask, and uniformly mixed by gradually raising the temperature to 180°C using an oil bath. After that, the mixture was slowly cooled to 100°C, and then an unblended epoxy resin shown in Tables 1 to 3 was weighed and uniformly mixed. Finally, the mixture was slowly cooled to about 60°C, and the curing agent masterbatch was added thereto and uniformly mixed to obtain a matrix resin composition.

A resin sheet was obtained using the obtained matrix resin composition according to the resin sheet producing method. Tables 1 to 3 show results of the bending test and the glass transition temperature (Tg) measurement performed on the obtained resin sheet. The resin sheet of Comparative Example 1 had a breaking elongation of 8.5% and a yield elongation of 7.9% in the bending test. In Example 1, the breaking elongation was 7.9% and the yield elongation was 7.6%, and in Example 2, the breaking elongation was 8.2% and the yield elongation was 7.7%. In addition, in Comparative Example 3, the breaking elongation was 8.4% and the yield elongation was 7.4%, in Example 13, the breaking elongation was 8.6% and the yield elongation was 6.9%, and in Example 16, the breaking elongation was 8.2% and the yield elongation was 6.5%.

Next, a prepreg and a molded sheet were obtained according to the producing methods of the prepreg and the molded sheet. Table 4 shows the fiber areal weight and resin areal weight during the production of the prepreg, the resin content of the obtained prepreg, and the number of molded sheets layered. Table 4 shows results of the bending test and the glass transition temperature (Tg) measurement performed on the obtained molded sheet. In Comparative Example 2 and Examples 1, 11, and 12, a fiber volume content (Vf) was converted to 60%, and in Comparative Example 3 and Example 16, the Vf was converted to 50%.

[Table 1]

| | | | Comparative Example 1 | Comparative Example 2 | Example 1 | Example 2 | Example 3 | Example 4 | Example 5 |
|---|---|---|---|---|---|---|---|---|---|
| Matrix Resin Composition (parts by mass) | Component (A) | jER828 | 71.6 | 70.2 | 70.2 | 71.6 | 71.6 | 71.6 | 71.6 |
| | | SR GreenPoxy 28 | - | - | - | - | - | - | - |
| | | N-670 | 27.8 | 27.8 | 27.8 | 27.8 | 27.8 | 27.8 | 27.8 |
| | | jER604 | - | - | - | - | - | - | - |
| | Thermoplastic Resin | YP-70 | 18.8 | 18.8 | - | - | - | - | - |
| | Component (B) | B-1 | - | - | - | 15.0 | - | - | - |
| | | B-2 | - | - | 18.8 | - | 12.0 | 15.0 | 15.0 |
| | Component (C) | DCMU | - | - | - | - | - | - | - |
| | | DICY | 2.4 | 2.4 | 2.4 | 2.4 | 2.4 | 2.4 | 1.0 |
| | | 2MZA-PW | 6.0 | 6.0 | 6.0 | 6.0 | 6.0 | 6.0 | 6.0 |
| | | 2MAOK-PW | - | - | - | - | - | - | - |
| | | PN-40J | - | - | - | - | - | - | - |
| | Additive | L-07N | - | 6.0 | 6.0 | - | - | - | - |
| | | Ethical Silica | - | - | - | - | - | - | - |
| Biomass Degree of Matrix Resin Composition | | | 0% | 0% | 8% | 7% | 5% | 6% | 7% |
| Resin Sheet | Bending Test | Strength (MPa) | 137 | 137 | 176 | 167 | 162 | 164 | 166 |
| | | Elastic Modulus (GPa) | 3.0 | 3.1 | 3.4 | 3.3 | 3.3 | 3.5 | 3.7 |
| | Tg (°C) | | 178 | 178 | 156 | 157 | 168 | 160 | 169 |

[Table 2]

| | | | Example 6 | Example 7 | Example 8 | Example 9 | Example 10 | Example 11 | Example 12 |
|---|---|---|---|---|---|---|---|---|---|
| Matrix Resin Composition (parts by mass) | Component (A) | jER828 | 71.6 | 71.6 | 70.2 | 70.2 | - | - | - |
| | | SR GreenPoxy 28 | - | - | - | - | 68.2 | 98.0 | 70.2 |
| | | N-670 | 27.8 | 27.8 | 27.8 | 27.8 | 29.8 | - | 27.8 |
| | | jER604 | - | - | - | - | - | - | - |
| | Thermoplastic Resin | YP-70 | - | - | - | - | - | - | - |
| | Component (B) | B-1 | - | - | - | - | - | - | - |
| | | B-2 | 15.0 | 15.0 | 15.0 | 15.0 | - | 35.0 | 20.0 |
| | Component (C) | DCMU | - | - | - | - | - | - | - |
| | | DICY | 0.5 | 0.0 | 4.8 | 2.4 | 2.4 | 2.4 | 2.4 |
| | | 2MZA-PW | 6.0 | 6.0 | 3.0 | - | 3.0 | 6.0 | 6.0 |
| | | 2MAOK-PW | - | - | - | 7.0 | - | - | - |
| | | PN-40J | - | - | - | - | 3.0 | - | - |
| | Additive | L-07N | - | - | - | - | - | 6.0 | 6.0 |
| | | Ethical Silica | - | - | - | - | - | - | 6.5 |
| Biomass Degree of Matrix Resin Composition | | | 7% | 7% | 7% | 7% | 18% | 31% | 26% |
| Resin Sheet | Bending Test | Strength (MPa) | 158 | 152 | 170 | 173 | 165 | 167 | 177 |
| | | Elastic Modulus (GPa) | 3.5 | 3.3 | 3.3 | 3.4 | 3.4 | 3.6 | 3.9 |
| | Tg (°C) | | 170 | 167 | 148 | 136 | 141 | 120 | 152 |

[Table 3]

| | | | Comparative Example 3 | Example 13 | Example 14 | Example 15 | Example 16 | Example 17 |
|---|---|---|---|---|---|---|---|---|
| Matrix Resin Composition (parts by mass) | Component (A) | jER828 | 70.2 | 70.2 | 70.2 | 70.2 | 70.2 | 70.2 |
| | | SR GreenPoxy 28 | - | - | - | - | - | - |
| | | N-670 | 27.8 | 27.8 | 27.8 | 27.8 | 27.8 | - |
| | | jER604 | - | - | - | - | - | 27.8 |
| | Thermoplastic Resin | YP-70 | 18.8 | - | - | - | - | - |
| | Component (B) | B-1 | - | 12.0 | 15.0 | 18.8 | - | 15.0 |
| | | B-2 | - | - | - | - | 18.8 | - |
| | Component (C) | DCMU | 3.1 | 3.1 | 3.1 | 3.1 | 3.1 | 3.1 |
| | | DICY | 4.7 | 4.7 | 4.7 | 4.7 | 4.7 | 4.7 |
| | | 2MZA-PW | - | - | - | - | - | - |
| | | 2MAOK-PW | - | - | - | - | - | - |
| | | PN-40J | - | - | - | - | - | - |
| | Additive | L-07N | - | - | - | - | - | - |
| | | Ethical Silica | - | - | - | - | - | - |
| Biomass Degree of Matrix Resin Composition | | | 0% | 6% | 7% | 9% | 8% | 7% |
| Resin Sheet | Bending Test | Strength (MPa) | 159 | 179 | 159 | 162 | 180 | 179 |
| | | Elastic Modulus (GPa) | 3.4 | 3.9 | 3.8 | 3.9 | 3.7 | 3.7 |
| | Tg (°C) | | 147 | 120 | 115 | 107 | 116 | 125 |

[Table 4]

| | | | Comparative Example 2 | Example 1 | Example 11 | Example 12 | Comparative Example 3 | Example 16 |
|---|---|---|---|---|---|---|---|---|
| Prepreg Producing Conditions | | Fiber Areal Weight ($g/m^2$) | 125 | 125 | 125 | 125 | 125 | 125 |
| | | Resin Areal Weight ($g/m^2$) | 26.8 | 26.8 | 26.8 | 26.8 | 41.7 | 41.7 |
| | | Resin Content (weight%) | 30 | 30 | 30 | 30 | 40 | 40 |
| Number of Molded Sheets Layered | | Number of Sheets Layered (number) | 18 | 18 | 18 | 18 | 16 | 16 |
| Molded Sheet | 0°-Bending Test | Strength (MPa) | 1915 | 2048 | 1915 | 2080 | 1601 | 1707 |
| | | Elastic Modulus (GPa) | 121 | 125 | 123 | 127 | 104 | 103 |
| | | Breaking Elongation (%) | 1.7 | 1.8 | 1.7 | 1.8 | 1.7 | 1.8 |
| | 90°-Bending Test | Strength (MPa) | 110 | 162 | 163 | 145 | 140 | 177 |
| | | Elastic Modulus (GPa) | 8.1 | 8.8 | 8.5 | 8.8 | 7.3 | 8.2 |
| | | Breaking Elongation (%) | 1.4 | 1.8 | 1.9 | 1.6 | 2.0 | 2.3 |
| | Tg (°C) | | 162 | 150 | 124 | 155 | 124 | 116 |

As shown in Tables 1 to 3, in a case where the matrix resin composition contained the component (B), the strength and the elastic modulus of the resin sheet were improved, as confirmed in the comparison between Examples 1 to 12 and Comparative Examples 1 and 2, and the comparison between Examples 13 to 17 and Comparative Example 3. In addition, it is found that the strength and the elastic modulus are improved while maintaining the toughness of the resin sheet, as confirmed in the comparison of the breaking elongation and the yield elongation of Comparative Example 1 with those of Examples 1 and 2 and the comparison of the breaking elongation and the yield elongation of Comparative Example 3 with those of Examples 13 and 16. In Examples 1 to 12 in which the component (C) included imidazole compounds, the resin sheet had a high glass transition temperature and was excellent in handleability during molding.

Furthermore, as shown in Table 4, in a case where the matrix resin composition contained the component (B), the obtained molded sheet had an improved strength and an improved elastic modulus while maintaining toughness, as confirmed in the comparison between Examples 1, 11, and 12 and Comparative Examples 1 and 2, and the comparison between Example 16 and Comparative Example 3. In particular, in the 90°-bending test, the strength and the elastic modulus were significantly improved by containing the component (B) in the matrix resin composition. The 90°-bending test depends not only on the performance of the matrix resin composition but also on the adhesiveness of the interface between the carbon fibers and the matrix resin. That is, it can be said that, in a case where the matrix resin composition contains the component (B), the adhesiveness between the carbon fibers and the matrix resin is improved in addition to the strength and the elastic modulus of the matrix resin composition. In Examples 1 and 12 in which the component (C) contained imidazole compounds, the molded sheet had a high glass transition temperature and was excellent in

handleability during molding.

In a case where jER828 used in Examples is replaced with, for example, SR GreenPoxy 29 (liquid bisphenol A type epoxy resin, epoxy equivalent 186 g/eq, biomass degree 30%, manufactured by Sicomin), the biomass degrees of Examples 1 to 13 and 16 and Comparative Examples 1 to 3 can be improved by 15% to 20%.

The prepreg and the fiber-reinforced composite article according to the embodiment described above can be used for various structural materials, including bodies or components of transportation equipment (including automobiles, motorcycles, and bicycles), sports goods, leisure goods, components of home appliances, components of agricultural machinery, building materials, and the like.

## Claims

1. A prepreg comprising:

    a matrix resin composition comprising at least the following components (A) to (C); and
    carbon fibers,
    component (A): an epoxy resin
    component (B): an aliphatic polycarbonate resin
    component (C): a curing agent.

2. The prepreg according to claim 1,
wherein an aliphatic polycarbonate resin having a glass transition temperature (Tg) of 80°C or higher is contained as the component (B).

3. The prepreg according to claim 1 or 2,
wherein the aliphatic polycarbonate resin of the component (B) comprises a structural unit derived from a dihydroxy compound represented by Formula (1).

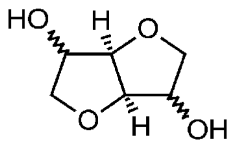

(1)

4. The prepreg according to claim 3,
wherein the aliphatic polycarbonate resin of the component (B) further comprises a structural unit derived from at least one alicyclic dihydroxy compound selected from the group consisting of 1,2-cyclohexanedimethanol, 1,3-cyclohexanedimethanol, 1,4-cyclohexanedimethanol, tricyclodecanedimethanol, pentacyclopentadecanedimethanol, 2,6-decalindimethanol, 1,5-decalindimethanol, 2,3-decalindimethanol, 2,3-norbornanedimethanol, 2,5-norbornanedimethanol, and 1,3-adamantanedimethanol.

5. The prepreg according to claim 1,
wherein at least one selected from the group consisting of dicyandiamides, urea compounds, acid hydrazide compounds, and imidazole compounds is contained as the component (C).

6. The prepreg according to claim 5,
wherein an imidazole compound is contained as the component (C).

7. The prepreg according to claim 1,
wherein the matrix resin composition comprises 5 parts by mass or more and 40 parts by mass or less of the aliphatic polycarbonate resin with respect to 100 parts by mass of the total epoxy resin.

8. The prepreg according to claim 1,
wherein the matrix resin composition comprises 8 parts by mass or more and 30 parts by mass or less of the aliphatic polycarbonate resin with respect to 100 parts by mass of the total epoxy resin.

9. The prepreg according to claim 1 or 2,
wherein a mass ratio ([mass of matrix resin composition]/[mass of carbon fibers]) of the matrix resin composition to the

carbon fibers is 0.25 to 9.

**10.** The prepreg according to claim 1 or 2,
wherein a sheet of carbon fibers aligned in one direction is impregnated with the matrix resin composition.

**11.** The prepreg according to claim 1 or 2,
wherein a biomass degree of the matrix resin composition is 5% or more.

**12.** A fiber-reinforced composite article that is obtained by curing the prepreg according to claim 10.

**13.** A method of producing a fiber-reinforced composite article, the method comprising:
pressing the prepreg according to claim 10 at 100°C to 160°C.

**14.** A prepreg comprising:
a carbon fiber substrate that is impregnated with a matrix resin composition comprising at least an epoxy resin, a polycarbonate resin including a structural unit derived from a dihydroxy compound represented by Formula (1), and an imidazole compound.

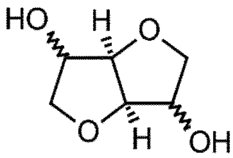

(1)

**15.** The prepreg according to claim 14,
wherein a polycarbonate resin having a glass transition temperature (Tg) of 80°C or higher is contained as the component (B).

**16.** The prepreg according to claim 14 or 15,
wherein the polycarbonate resin further comprises a structural unit derived from at least one alicyclic dihydroxy compound selected from the group consisting of 1,2-cyclohexanedimethanol, 1,3-cyclohexanedimethanol, 1,4-cyclohexanedimethanol, tricyclodecanedimethanol, pentacyclopentadecanedimethanol, 2,6-decalindimethanol, 1,5-decalindimethanol, 2,3-decalindimethanol, 2,3-norbornanedimethanol, 2,5-norbornanedimethanol, and 1,3-adamantanedimethanol.

**17.** The prepreg according to claim 14 or 15,
wherein the matrix resin composition comprises 5 parts by mass or more and 30 parts by mass or less of the polycarbonate resin with respect to 100 parts by mass of the total epoxy resin.

**18.** The prepreg according to claim 14 or 15,
wherein the carbon fiber substrate is a sheet of carbon fibers aligned in one direction.

**19.** The prepreg according to claim 14 or 15,
wherein a biomass degree of the matrix resin composition is 5% or more.

## INTERNATIONAL SEARCH REPORT

International application No.
**PCT/JP2023/026808**

### A. CLASSIFICATION OF SUBJECT MATTER

***C08J 5/24***(2006.01)i
FI: C08J5/24 CFC

According to International Patent Classification (IPC) or to both national classification and IPC

### B. FIELDS SEARCHED

Minimum documentation searched (classification system followed by classification symbols)

B29B11/16; B29B15/08-15/14; C08J5/04-5/10; C08J5/24; C08K3/00-13/08; C08L1/00-101/14

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br><br>A | JP 2012-021112 A (TOHO TENAX CO LTD) 02 February 2012 (2012-02-02)<br>claims 1, 8-9, paragraphs [0025]-[0026], [0038]-[0039], [0046] | 1-2, 5-13<br><br>3-4, 14-19 |
| A | JP 2013-203788 A (TEIJIN LTD) 07 October 2013 (2013-10-07)<br>claims 1, 8, paragraph [0030], examples | 1-19 |
| A | JP 2013-100562 A (DIC CORP) 23 May 2013 (2013-05-23)<br>claims 1, 4-7, paragraphs [0042], [0062]-[0064], examples | 1-19 |
| A | JP 02-092919 A (NIPPON OIL CO LTD) 03 April 1990 (1990-04-03)<br>claims 1-3, examples | 1-19 |
| A | JP 2014-133841 A (MITSUBISHI CHEMICALS CORP) 24 July 2014 (2014-07-24)<br>claim 1, paragraph [0001], examples | 1-19 |
| P, X | JP 2022-147485 A (MITSUBISHI CHEM CORP) 06 October 2022 (2022-10-06)<br>claims 1, 7-8, example 1 | 1-19 |

☐ Further documents are listed in the continuation of Box C.    ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **21 September 2023** | **03 October 2023** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | <br><br>Telephone No. |

Form PCT/ISA/210 (second sheet) (January 2015)

**INTERNATIONAL SEARCH REPORT**
**Information on patent family members**

International application No.
**PCT/JP2023/026808**

| Patent document cited in search report | Publication date (day/month/year) | Patent family member(s) | Publication date (day/month/year) |
|---|---|---|---|
| JP 2012-021112 A | 02 February 2012 | (Family: none) | |
| JP 2013-203788 A | 07 October 2013 | (Family: none) | |
| JP 2013-100562 A | 23 May 2013 | (Family: none) | |
| JP 02-092919 A | 03 April 1990 | (Family: none) | |
| JP 2014-133841 A | 24 July 2014 | (Family: none) | |
| JP 2022-147485 A | 06 October 2022 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2022119013 A
- JP H292919 A
- JP 2012021112 A
- JP 2014133841 A